(19) **Europäisches Patentamt European Patent Office Office européen des brevets**

(11) **EP 3 347 943 B1**

(12) **FASCICULE DE BREVET EUROPEEN**

(45) Date de publication et mention
de la délivrance du brevet:
**22.02.2023 Bulletin 2023/08**

(21) Numéro de dépôt: **16774872.2**

(22) Date de dépôt: **09.09.2016**

(51) Classification Internationale des Brevets (IPC):
*H01Q 21/28* (2006.01)   *H01Q 1/32* (2006.01)
*G07C 9/00* (2006.01)

(52) Classification Coopérative des Brevets (CPC):
**H01Q 1/3241; G07C 9/00309; H01Q 21/28;**
G07C 2209/63

(86) Numéro de dépôt international:
**PCT/EP2016/071382**

(87) Numéro de publication internationale:
**WO 2017/042374 (16.03.2017 Gazette 2017/11)**

(54) **UNITÉ ÉLECTRONIQUE DE COMMANDE DE VÉHICULE AUTOMOBILE ET PROCÉDÉ DE CONTRÔLE DE FONCTIONNALITÉS DU VÉHICULE AUTOMOBILE AU MOYEN D'UN TERMINAL MOBILE**

ELEKTRONISCHE EINHEIT ZUR STEUERUNG EINES FAHRZEUGS UND VERFAHREN ZUR ÜBERWACHUNG DER FUNKTIONEN DES KRAFTFAHRZEUGES MIT EINEM MOBILEN ENDGERÄT

ELECTRONIC UNIT FOR CONTROLLING AUTOMOTIVE VEHICLE AND METHOD OF MONITORING FUNCTIONALITIES OF THE AUTOMOTIVE VEHICLE BY MEANS OF A MOBILE TERMINAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.09.2015 FR 1558500**

(43) Date de publication de la demande:
**18.07.2018 Bulletin 2018/29**

(73) Titulaire: **Valeo Comfort and Driving Assistance 94046 Créteil Cedex (FR)**

(72) Inventeurs:
• **BOURASSI, Abdelhafid 94046 Créteil CEDEX (FR)**
• **PARVERY, Hervé 94046 Créteil CEDEX (FR)**
• **ROBINEAU, José 94046 Créteil CEDEX (FR)**

(74) Mandataire: **Delaval, Guillaume Laurent et al Valeo Comfort and Driving Assistance 6 rue Daniel Costantini 94000 Créteil (FR)**

(56) Documents cités:
**DE-A1- 19 845 649    FR-A1- 2 832 510 JP-A- 2015 113 643**

**Description**

DOMAINE TECHNIQUE AUQUEL SE RAPPORTE L'INVENTION

La présente invention concerne de manière générale la commande de fonctionnalités d'un véhicule automobile au moyen d'un terminal mobile.

Elle concerne plus particulièrement une unité électronique de commande destinée à équiper un véhicule automobile, comprenant une antenne et un contrôleur qui est connecté à cette antenne et qui est adapté à commander une fonctionnalité du véhicule automobile en fonction de signaux échangés avec un terminal mobile via l'antenne.

Elle concerne également un procédé de contrôle de l'accès à au moins une fonctionnalité d'un véhicule automobile par un utilisateur équipé d'un terminal mobile.

L'invention s'applique particulièrement avantageusement dans le cas où la fonctionnalité commandée est le déverrouillage des portières du véhicule ou le démarrage du moteur du véhicule.

ARRIERE-PLAN TECHNOLOGIQUE

On a proposé de commander certaines fonctionnalités d'un véhicule automobile, telles que le déverrouillage des portières ou le démarrage du moteur, au moyen d'un terminal mobile, par exemple un téléphone portable couramment utilisé par le propriétaire du véhicule.

La demande d'accès aux fonctionnalités du véhicule automobile peut alors être initiée par une action de l'utilisateur, par exemple par un appui sur un bouton du terminal mobile. Elle peut également s'initier automatiquement, par exemple lorsque l'utilisateur est détecté comme arrivant à proximité immédiate du véhicule automobile ou comme entrant à l'intérieur de l'habitacle du véhicule.

Pour cela, l'unité électronique de commande embarquée dans le véhicule est équipée d'une antenne lui permettant de communiquer avec le terminal mobile. Pour des raisons de coûts, cette antenne est généralement placée sur la carte électronique de l'unité électronique de commande embarquée.

Avant d'autoriser un quelconque accès à la fonctionnalité du véhicule automobile, il est prévu, pour des raisons de sécurité, que l'unité électronique de commande vérifie si le porteur du terminal mobile se trouve à proximité du véhicule automobile. Ainsi, à titre d'exemple illustratif, si l'utilisateur s'écarte de son véhicule puis qu'une personne malintentionnée y pénètre et tente de démarrer le véhicule, ce démarrage lui sera interdit du fait de la distance séparant le véhicule du porteur du terminal mobile.

De manière plus détaillée, dans l'éventualité où l'utilisateur commande le déverrouillage des portières en appuyant sur un bouton du terminal mobile, on souhaite vérifier que cette distance est inférieure à un premier seuil (généralement de l'ordre d'une vingtaine de mètres).

Pour commander le déverrouillage automatique des portières lorsque l'on détecte que l'utilisateur s'approche du véhicule, on souhaite vérifier que cette distance est inférieure à un second seuil (généralement de l'ordre d'un à cinq mètres).

Pour commander le démarrage automatique du moteur du véhicule, on souhaite vérifier que cette distance est inférieure à un troisième seuil (généralement inférieur au mètre, ce qui permet de s'assurer que l'utilisateur est entré dans l'habitacle du véhicule).

Le problème majeur est qu'il s'avère en pratique extrêmement difficile de déterminer avec précision la distance séparant le véhicule du terminal mobile.

Une méthode pour déterminer cette distance pourrait consister à mesurer la puissance électromagnétique reçue par l'antenne. En effet, théoriquement, la perte de puissance du signal entre son émission par le terminal mobile et sa réception par l'antenne est fonction de la distance séparant ces deux éléments.

En pratique, cette méthode ne donne pas des résultats suffisamment fiables pour être exploités, pour les raisons suivantes.

La première raison est que l'antenne présente un diagramme de rayonnement non isotrope. Autrement formulé, la puissance émise par l'antenne n'est pas la même dans toutes les directions de l'espace. De la même manière, la puissance reçue par l'antenne varie selon la direction d'où provient le signal. Aussi, à titre d'exemple, la puissance électromagnétique mesurée ne sera pas la même selon que le porteur du terminal mobile se trouve à 10 mètres devant le véhicule ou à 10 mètres derrière le véhicule.

La seconde raison est que le signal est sujet à de fortes variations du fait de l'environnement dans lequel l'antenne se trouve, variations qu'il n'est pas possible de prévoir ou d'évaluer. Ainsi, lorsque l'antenne est située dans l'habitacle du véhicule, le signal se réfléchit plusieurs fois avant d'être reçu par l'antenne. Le signal s'atténué par ailleurs à la traversée des différents obstacles qu'il rencontre.

Dès lors, il apparaît délicat de connaître avec une acuité suffisante la distance entre le porteur du terminal mobile et l'antenne équipant le véhicule automobile.

Par ailleurs, le caractère non isotrope de l'antenne ne permet pas d'assurer une bonne transmission du signal entre l'antenne et le terminal mobile quelle que soit la position de celui-ci par rapport au véhicule automobile, ce qui peut s'avérer gênant pour l'utilisateur, par exemple lorsqu'il souhaite verrouiller à distance les portières de son véhicule.

La publication de demande de brevet français FR283251 0A1 divulgue un dispositif de localisation de l'origine d'une source rayonnante, notamment par mesure de la distance le séparant de ladite source rayonnante.

Le publication de demande de brevet allemande DE19845649A1 divulgue un dispositif de contrôle d'accès et/ou d'autorisation de conduite sans clé pour un véhicule automobile avec un émetteur-récepteur côté véhicule automobile et avec un émetteur d'identification mobile (émetteur ID), lequel dispositif émetteur-récepteur côté véhicule automobile est attribué à deux côtés différents du véhicule pour transmettre un signal sur une liaison radio à basse fréquence et une unité de réception pour recevoir un signal de réponse envoyé par l'émetteur d'ID et qui transmetteur d'identification comprend une partie d'émetteur - récepteur.

La publication de demande de brevet japonaise JP2015113643A divulgue un système d'entrée sans clé capable de déterminer avec précision si un équipement portable se trouve dans une cabine sans aucune augmentation de coût en composant une antenne de transmission de deux antennes.

OBJET DE L'INVENTION

Afin de remédier aux inconvénients précités de l'état de la technique, la présente invention propose une unité électronique de commande selon la revendication 1.

L'invention propose également un procédé de contrôle de l'accès à au moins une fonctionnalité d'un véhicule automobile par un utilisateur équipé d'un terminal mobile selon la revendication 5.

DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 est une vue schématique d'un terminal mobile et d'un véhicule automobile équipé d'une unité électronique de commande conforme à l'invention ;
- la figure 2 représente schématiquement des composants du véhicule automobile et du terminal mobile de la figure 1, utiles à la compréhension de l'invention ;
- la figure 3 représente les diagrammes de rayonnement des deux antennes de l'unité électronique de commande de la figure 1 ; et
- la figure 4 représente, en partie supérieure, deux histogrammes illustrant la répartition des niveaux de puissance des signaux reçus par chaque antenne pour plusieurs positions du terminal mobile dans l'habitacle du véhicule automobile, et, en partie inférieure, un histogramme illustrant la répartition des moyennes géométriques desdits niveaux de puissance.

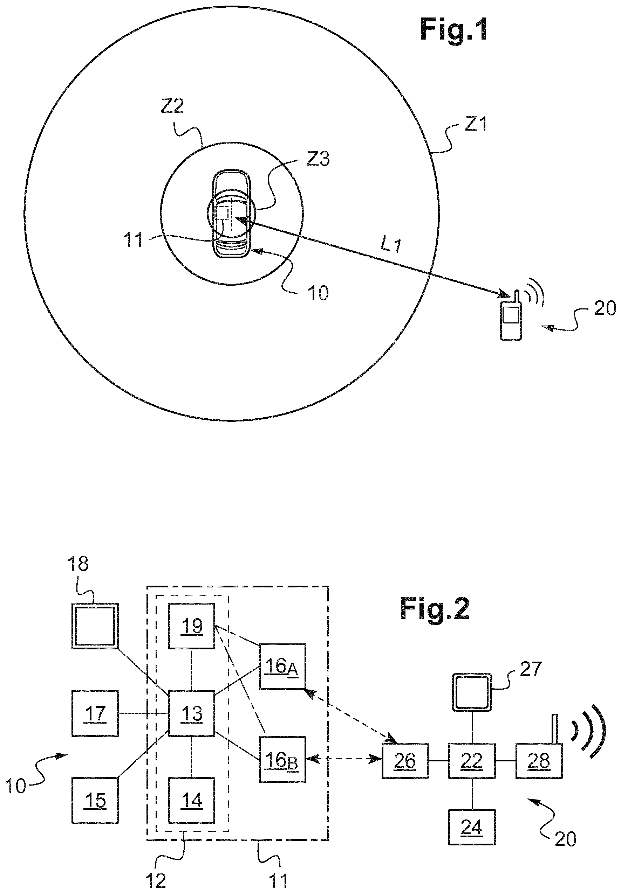

La figure 1 représente un exemple de contexte dans lequel peut être mise en oeuvre l'invention.

Dans ce contexte, un véhicule automobile 10 comprend une unité électronique de commande 11 (ou ECU pour "Electronic Control Unit") qui peut entrer en communication, via une liaison sans fil, avec un terminal mobile 20 afin d'échanger des données avec ce terminal mobile 20. Cet échange de données permet notamment de commander des fonctionnalités du véhicule automobile 10 au moyen du terminal mobile 20 (une telle fonctionnalité pouvant être par exemple le déverrouillage des portières du véhicule automobile 10 ou le démarrage du moteur du véhicule).

Le terminal mobile 20 sera préférentiellement un téléphone portable (ou téléphone cellulaire), éventuellement de type "téléphone intelligent" ou "smartphone" selon la dénomination anglo-saxonne couramment utilisée. En variante, il pourrait s'agir d'une télécommande, d'une montre connectée, d'une paire de lunettes connectée, d'une tablette informatique...

La liaison sans fil utilisée pour communiquer entre l'unité électronique de commande 11 et le terminal mobile 20 est ici de type Bluetooth. En variante, un autre protocole de communication à faible ou moyenne portée (de l'ordre de la centaine de mètres) pourrait être utilisé.

La figure 2 représente schématiquement des composants du véhicule automobile 10 et du terminal mobile 20, utiles à la compréhension de l'invention.

Sur cette figure, on observe que, outre l'unité électronique de commande 11 déjà mentionnée, le véhicule automobile 10 comprend un premier actionneur 15 (conçu ici pour permettre le déverrouillage des portières du véhicule automobile 10), un second actionneur 17 (conçu ici pour permettre le démarrage du véhicule) et une interface utilisateur 18 (conçu ici pour permettre au conducteur de saisir des informations).

Comme le montre cette figure 2, l'unité électronique de commande 11 comprend un contrôleur 12 qui est adapté à commander les actionneurs 15, 17 et qui est adapté à communiquer avec l'interface utilisateur 18.

Selon une caractéristique particulièrement avantageuse de l'invention, l'unité électronique de commande 11 comprend également une première antenne $16_A$ et une seconde antenne $16_B$ qui présentent des propriétés électromagnétiques et/ou des positions différentes, et qui sont connectées au contrôleur 12 de telle manière que ce dernier peut générer une consigne de commande des actionneurs 15, 17 en fonction de signaux échangés avec le terminal mobile 20 via l'une et/ou l'autre de ces deux antennes $16_A$, $16_B$.

Dans le mode de réalisation représenté sur la figure 2, le contrôleur 12 comporte un processeur 13 et une unité de mémorisation 14, par exemple une mémoire non-volatile réinscriptible.

L'unité de mémorisation 14 mémorise notamment des programmes d'ordinateur comprenant des instructions dont l'exécution par le processeur 13 permet la mise en oeuvre par l'unité électronique de commande 11 du procédé décrit ci-dessous.

L'unité de mémorisation 14 mémorise également des données invariables utilisées dans le cadre du procédé décrit ci-dessous, notamment trois seuils de distance $L_{seuil1}$, $L_{seuil2}$, $L_{seuil3}$.

Le contrôleur 12 comporte aussi des moyens de mesure 19 permettant de mesurer en continu :

- un premier niveau de puissance $RSSI_A$ (de l'anglais « *Received Signal Strength Indication* ») correspondant à la puissance en réception du signal reçu par la première antenne $16_A$, et
- un second niveau de puissance $RSSI_B$ correspondant à la puissance en réception du signal reçu par la seconde antenne $16_B$.

Ces deux niveaux de puissance permettent de fournir une indication sur l'intensité du signal reçu par chaque antenne.

Comme le montre également la figure 2, le terminal mobile 20, dont on rappelle qu'il s'agit ici d'un téléphone portable, comprend un processeur 22, une mémoire 24 (par exemple une mémoire non-volatile réinscriptible), une interface utilisateur 27, un module de communication à courte ou moyenne portée 26 et un module de communication à longue portée 28.

L'interface utilisateur est ici formée par l'écran tactile du téléphone portable. En variante, il pourrait s'agir d'un clavier ou d'un bouton (dans la variante où le terminal mobile serait une simple télécommande).

La mémoire 24 permet notamment au terminal mobile 20 de mémoriser une application utilisateur, destinée à faciliter la commande des fonctionnalités du véhicule au moyen de ce terminal mobile 20.

Le module de communication à courte ou moyenne portée 26 du terminal mobile 20 comporte une antenne qui permet au processeur 22 du terminal mobile 20 d'établir une liaison sans fil (ici de type Bluetooth comme déjà indiqué) avec le contrôleur 12 de l'unité électronique de commande 11 via les deux antennes $16_A$, $16_B$.

Enfin, le module de communication à longue portée 28 permet au terminal mobile 20 d'échanger des données sur le réseau de téléphonie mobile.

Comme cela a été indiqué supra, les deux antennes $16_A$, $16_B$ de l'unité électronique de commande 11 présentent des propriétés électromagnétiques et/ou des positions différentes.

L'intérêt est que, lorsque le terminal mobile 20 émet un seule et même signal (via son unique antenne), le contrôleur 12 reçoive, via les deux antennes $16_A$, $16_B$, deux signaux différents.

De cette manière, le contrôleur 12 va pouvoir exploiter ces différences de signaux afin de :

- optimiser la qualité de la connexion entre le terminal mobile 20 et l'unité électronique de commande 11,
- accroître la précision de la détermination de la distance L1 séparant le véhicule automobile 10 du terminal mobile 20 (voir figure 1), et ainsi
- sécuriser l'accès aux fonctionnalités du véhicule (déverrouillage des portières et démarrage du moteur).

Plus précisément, les positions des deux antennes $16_A$, $16_B$ pourront être qualifiées de différentes :

- si ces deux antennes $16_A$, $16_B$ sont situées à une distance l'une de l'autre qui est supérieure au quart de la longueur d'onde minimum utilisée pour communiquer avec le terminal mobile 20, et/ou
- si ces deux antennes $16_A$, $16_B$ sont orientées dans des directions inclinées l'une par rapport à l'autre d'un angle supérieur à 10 degrés.

Ici, le protocole de communication utilisé étant le Bluetooth, la longueur d'onde minimum précitée est égale à 0.3 / 2.4835 mètre.

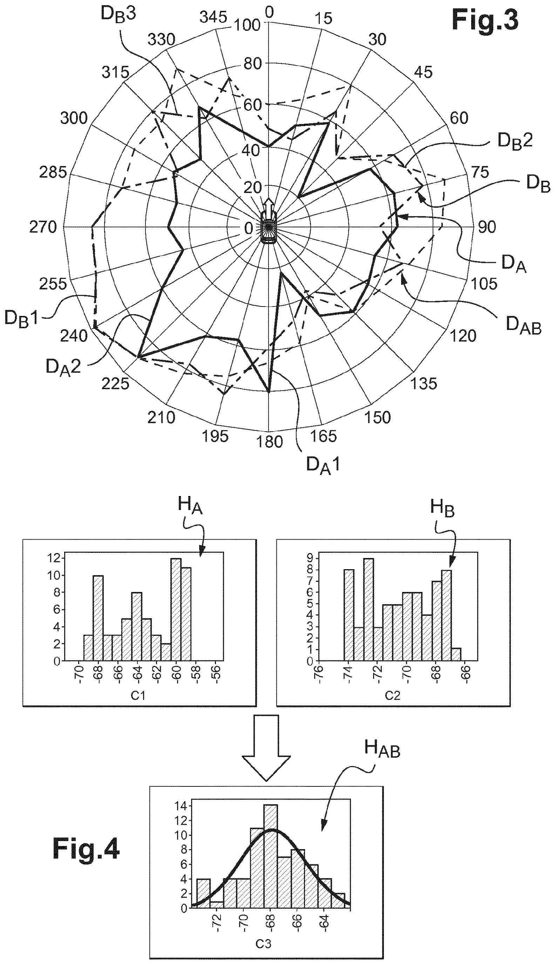

Par ailleurs, les propriétés électromagnétiques des deux antennes $16_A$, $16_B$ pourront être qualifiées de différentes si leurs diagrammes de rayonnement $D_A$, $D_B$ présentent des formes différentes (voir figure 3).

On rappelle à ce sujet que le diagramme de rayonnement d'une antenne radioélectrique est la représentation graphique de la répartition dans l'espace (bidimensionnel ou tridimensionnel) d'une grandeur caractérisant le rayonnement de l'antenne. Sur la figure 3, cette grandeur est ici la puissance émise par l'antenne.

Les diagrammes de rayonnement $D_A$, $D_B$ permettent de visualiser les lobes principaux d'émission et de réception $D_A1$, $D_A2$, $D_B1$, $D_B2$, $D_B3$ de chaque antenne $16_A$, $16_B$, c'est-à-dire les directions dans lesquelles les antennes $16_A$, $16_B$ rayonnent le mieux.

Selon l'invention, les deux antennes $16_A$, $16_B$ sont positionnées l'une par rapport à l'autre de telle manière que les lobes principaux d'émission et de réception $D_A1$, $D_A2$ de la première antenne $16_A$ soient orientés dans des directions différentes de celles des lobes principaux d'émission et de réception $D_B1$, $D_B2$, $D_B3$ de la seconde antenne $16_B$.

Ainsi, on pourra prévoir d'orienter les deux antennes $16_A$, $16_B$ de telle manière que le lobe principal d'émission et de réception de l'une des antennes soit orienté dans la direction où la puissance d'émission et de réception de l'autre antenne est la plus faible.

L'objectif est que l'enveloppe circonscrite à ces deux diagrammes de rayonnement $D_A$, $D_B$ soit la plus circulaire possible (c'est-à-dire la plus isotrope possible), de manière que la qualité des échanges entre le terminal mobile 20 et l'unité électronique de commande 11 soit sensiblement la même, quelle que soit la position angulaire relative du terminal mobile 20 par rapport au véhicule automobile 10.

Ainsi, si la puissance d'émission et de réception de l'une des antennes est très faible dans une direction donnée (ce qui génère une zone d'ombre dans laquelle cette antenne ne pourra pas communiquer avec le terminal mobile), l'autre antenne pourra permettre de masquer cette zone d'ombre.

En pratique, pour des raisons de coûts, les deux antennes $16_A$, $16_B$ sont ici installées sur la carte électronique de l'unité électronique de commande 11, celle-là même qui porte le processeur 13 et les moyens de mesure 19.

En variante, elles pourraient être placées à distance de cette carte électronique, à l'intérieur ou à l'extérieur de l'habitacle du véhicule, et à l'intérieur ou à l'extérieur de la carrosserie du véhicule.

Comme cela a été exposé supra, l'intérêt du dispositif décrit ci-dessus est de permettre au porteur du terminal mobile 20 d'accéder aux fonctionnalités du véhicule automobile 10 soit de manière manuelle (en utilisant l'application utilisateur et l'écran tactile 27 du terminal mobile 20), soit de manière automatique (en détectant la position du terminal mobile 20 par rapport au véhicule automobile 10).

Pour cela, le procédé est opéré en cinq étapes principales a) à e) qui, en résumé, sont mises en oeuvre de la manière suivante.

Au cours d'une étape a), lorsqu'il est à portée de l'une au moins des antennes $16_A$, $16_B$ de l'unité électronique de commande 11 du véhicule automobile 10, le terminal mobile 20 émet un signal, appelé signal émis S1.

A l'étape b), ce signal émis S1 se propage jusqu'aux deux antennes $16_A$, $16_B$. De cette manière, le contrôleur 12 reçoit deux signaux, dont :

- un premier signal reçu $S2_A$ qui correspond à une composante du signal émis S1 ayant été reçue par la première antenne $16_A$, et
- un second signal reçu $S2_B$ qui correspond à une composante du signal émis S1 ayant été reçue par la seconde antenne $16_B$.

A l'étape c), les moyens de mesure 19 du contrôleur 12 mesurent les premier et second niveaux de puissance $RSSI_A$, $RSSI_B$ des premier et second signaux reçus $S2_A$, $S2_B$.

A l'étape d), le contrôleur 12 vérifie que le terminal mobile 20 est autorisé à accéder à ladite fonctionnalité. Cette étape est opérée en fonction des premier et second niveaux de puissance $RSSI_A$, $RSSI_B$ mesurés.

A l'étape e), si le terminal mobile 20 est autorisé à accéder à ladite fonctionnalité, le contrôleur 12 commande l'un des actionneurs 15, 17 pour autoriser l'accès à ladite fonctionnalité.

L'étape d), qui constitue le coeur de ce procédé, pourra être mise en oeuvre de diverses manières.

Elle pourra notamment être mise en oeuvre de manière différente selon la fonctionnalité à laquelle le porteur du terminal mobile 20 souhaite avoir accès et selon la manière selon laquelle l'accès est demandé (automatiquement ou manuellement).

Dans le présent exposé, on pourra illustrer ce procédé en distinguant trois cas de figure.

Le premier cas de figure sera celui où le porteur commandera manuellement le déverrouillage des portières en utilisant l'application utilisateur mémorisée dans son terminal mobile 20. Dans ce cas de figure, le procédé permettra de maximiser la portée des échanges entre le terminal mobile 20 et le véhicule automobile 10 dans toutes les directions autour de ce véhicule (de manière quasi-isotrope). Le procédé permettra en outre ici, de manière facultative, de vérifier que la distance entre le porteur du terminal mobile 20 et le véhicule automobile 10 est inférieure à un premier seuil de distance $L_{seuil1}$. Ce premier seuil de distance $L_{seuil1}$ correspond au cercle Z1 illustré sur la figure 1. Il est ici choisi entre 10 et 20 mètres.

Le second cas de figure sera celui où l'unité électronique de commande 11 détectera que le porteur du terminal mobile 20 s'approche du véhicule automobile et qu'il commandera automatiquement le déverrouillage des portières. Dans ce cas de figure, le procédé permettra de vérifier que la distance entre le porteur du terminal mobile 20 et le véhicule automobile 10 est inférieure à un second seuil de distance $L_{seuil2}$, strictement inférieur au premier seuil de distance $L_{seuil1}$. Ce second seuil de distance $L_{seuil2}$ correspond au cercle Z2 illustré sur la figure 1. Il est ici choisi entre 2 et 10 mètres.

Le troisième cas de figure sera celui où l'unité électronique de commande 11 détectera que le porteur du terminal mobile 20 rentre dans le véhicule automobile et qu'il commandera automatiquement le démarrage du moteur. Dans ce cas de figure, le procédé permettra de vérifier que la distance entre le porteur du terminal mobile 20 et le véhicule automobile 10 est inférieure à un troisième seuil de distance $L_{seuil3}$, strictement inférieur au second seuil de distance $L_{seuil2}$. Ce troisième seuil de distance $L_{seuil3}$ correspond au cercle Z3 illustré sur la figure 1. Il est ici choisi égal à 80 centimètres.

Dans ces trois cas de figure, il est donc prévu d'évaluer la distance L1 séparant l'unité électronique de commande 11 du terminal mobile 20, de telle sorte qu'à l'étape d), le terminal mobile 20 soit autorisé à accéder à la fonctionnalité souhaitée uniquement si ladite distance L1 est inférieure au seuil de distance $L_{seuil1}$, $L_{seuil2}$, $L_{seuil3}$ correspondant. Comme cela sera bien décrit ci-après, cette évaluation sera réalisée en fonction des premier et second niveaux de puissance $RSSI_A$, $RSSI_B$ mesurés.

Considérons tout d'abord le premier cas, celui où le porteur commande manuellement le déverrouillage des portières à l'aide de l'écran tactile 27 du terminal mobile 20.

A l'étape a), le terminal mobile 20 émet donc un signal émis S1, constituant un requête de déverrouillage des portières.

Comme cela a été exposé supra, aux étapes b) et c), deux signaux reçus $S2_A$, $S2_B$, présentant respectivement des niveaux de puissance $RSSI_A$, $RSSI_B$, sont alors acquis par le calculateur 12.

Alors, préalablement à l'étape d), le contrôleur 12 exploite tout d'abord ces deux signaux reçus $S2_A$, $S2_B$ pour estimer la distance L1 séparant le terminal mobile 20 du véhicule automobile 10.

Cette estimation est réalisée compte tenu du fait que, théoriquement, la perte de puissance du signal entre son émission par le terminal mobile 20 et sa réception par l'antenne considérée est fonction de la distance séparant ces deux éléments.

L'unité de mémorisation 14 enregistre alors un tableau qui fait correspondre, à chaque niveau de puissance $RSSI_A$, $RSSI_B$ mesurée, une distance estimé.

Puisqu'il acquiert deux signaux reçus $S2_A$, $S2_B$, le contrôleur 12 peut alors lire dans ce tableau deux distances estimées $L1_A$, $L1_B$.

Du fait que la perte de puissance des signaux est affectée par de nombreux facteurs autres que la distance séparant le terminal mobile 20 des antennes $16_A$, $16_B$, ces deux distances estimées $L1_A$, $L1_B$ ne sont généralement pas égales.

Alors, le contrôleur 12 peut estimer que la distance L1 séparant le terminal mobile 20 du véhicule automobile 10 est égale à la moyenne arithmétique des deux distances estimées $L1_A$, $L1_B$, ce que l'on peut écrire :

$$L1 = (L1_A + L1_B) / 2$$

En variante, le contrôleur 12 pourrait estimer la distance L1 autrement.

A titre d'exemple préférentiel, il pourrait estimer la distance L1 en considérant non pas les niveaux de puissance $RSSI_A$, $RSSI_B$ d'une seule paire de signaux reçus $S2_A$, $S2_B$, mais plutôt les niveaux de puissance $RSSI_A(k)$, $RSSI_B(k)$ de plusieurs paires de signaux reçus $S2_A(k)$, $S2_B(k)$, reçus à des instants k successifs.

En d'autres termes, dans cette variante, on ne considérera plus uniquement une seule paire de signaux reçus à un instant donné, mais plusieurs paires de signaux reçus au cours d'un intervalle temporel constitué d'un nombre fini d'instants k. Il sera ainsi possible de considérer les N derniers instants k (l'ensemble des N derniers instants k formant alors ce qu'on appelle « une fenêtre temporelle glissante »).

Pour cela, le contrôleur 12 pourra émettre des requêtes successives vers le terminal mobile 20, de manière que celui-ci renvoie une pluralité de signaux émis S1 à des instants k successifs. Alors, le contrôleur 12 acquerra plusieurs paires de signaux reçus $S2_A(k)$, $S2_B(k)$, présentant respectivement des niveaux de puissance $RSSI_A(k)$, $RSSI_B(k)$. Il pourra alors lire dans le tableau mémorisé dans son unité de mémorisation 14 les valeurs correspondantes des distances estimées $L1_A(k)$, $L1_B(k)$. Enfin, il pourra estimer la distance L1 de la manière suivante :

$$L1 = \frac{1}{N} \cdot \sum_{k=1}^{N} \frac{L1_A(k) + L1_B(k)}{2}$$

Quoi qu'il en soit, une fois que la distance L1 a été estimée, le contrôleur 12 compare cette distance L1 avec le premier seuil de distance $L_{seuil1}$.

Tant que cette distance L1 est supérieure au premier seuil de distance $L_{seuil1}$, le contrôleur 12 interrompt le procédé, de sorte que les portières demeurent verrouillées.

En revanche, si cette distance L1 est inférieure ou égale au premier seuil de distance $L_{seuil1}$, ce qui signifie que le terminal mobile 20 est situé dans la zone matérialisée par le cercle Z1 sur la figure 1, le contrôleur 12 vérifie si le terminal mobile 20 est effectivement autorisé à déverrouiller les portières du véhicule automobile.

Cette opération consiste à vérifier qu'une clé virtuelle valable est stockée dans la mémoire 24 du terminal mobile 20.

Cette opération est réalisée grâce à un échange d'informations entre le contrôleur 12 et le terminal mobile 20. Puisque le contenu de ces informations ne fait pas l'objet de la présente invention, cet échange ne sera pas ici décrit plus en détail.

On pourra en revanche préciser qu'au cours de cette étape d), le contrôleur 12 pourra utiliser l'une quelconque des deux antennes $16_A$, $16_B$ afin de communiquer avec le terminal mobile 20.

Ici, de manière avantageuse, le contrôleur 12 exploitera uniquement l'antenne $16_A$, $16_B$ par laquelle a transité le signal reçu $S2_A$, $S2_B$ dont le niveau de puissance $RSSI_A$, $RSSI_B$ était le plus élevé.

De cette manière, la qualité des échanges d'information reste assurée.

Toutefois, si à un moment donné, la communication est interrompue, le contrôleur 12 pourra tenter d'exploiter l'autre antenne afin de rétablir l'échange d'informations.

Dans une variante de mise en oeuvre de ce premier cas de figure, on pourra envisager que le calculateur ne vérifie pas que la distance L1 entre le porteur du terminal mobile 20 et le véhicule automobile 10 est inférieure au seuil de distance $L_{seuil1}$. Dans cette variante, on estimera que si la connexion a pu être établie entre le terminal mobile 20 et le véhicule automobile 10, cela signifie que le terminal mobile 20 est à une distance suffisamment faible du véhicule automobile 10 pour pouvoir autoriser le déverrouillage des portières.

Considérons maintenant le second cas de figure, celui où le déverrouillage des portières est commandé automatiquement, à l'entrée du porteur du terminal mobile 20 dans la zone matérialisée par le cercle Z2 sur la figure 1.

Initialement, l'unité électronique de commande 11 reste dans l'attente de recevoir des signaux du terminal mobile 20.

Il envoie alors, via l'une et/ou l'autre de ses deux antennes 16$_A$, 16$_B$ et à intervalles réguliers, des requêtes successives de manière à détecter la présence du terminal mobile 20.

A ce stade, l'utilisation des deux antennes permet de maximiser la portée de ce signal puisque, comme cela a été exposé supra, les zones d'ombre de chaque antenne sont masquées par l'autre antenne.

Puis, dès que la présence du terminal mobile 20 est détectée, l'unité électronique de commande 11 évalue la distance L1 la séparant du terminal mobile 20, en fonction des premier et second niveaux de puissance RSSI$_A$, RSSI$_B$, de la même manière que celle décrite précédemment.

Alors, le déverrouillage des portières du véhicule sera commandé automatiquement par l'unité électronique de commande 11 dès que cette distance L1 sera inférieure à un seuil prédéterminé L$_{seuil1}$ (pour autant que le terminal mobile 20 stocke une clé virtuelle valable dans sa mémoire 24).

Considérons enfin le troisième cas de figure, celui où le démarrage du moteur est commandé automatiquement, à l'entrée du porteur du terminal mobile 20 dans l'habitacle du véhicule automobile 10.

Ici, la précision requise pour déterminer la distance entre le terminal mobile 20 et les antennes 16$_A$, 16$_B$ de l'unité électronique de commande 11 est très élevée, dans la mesure où l'on souhaite distinguer le cas où le terminal mobile 20 est situé à l'intérieur de l'habitacle du véhicule automobile du cas où ledit terminal mobile 20 est situé à l'extérieur de l'habitacle du véhicule automobile (à proximité immédiate de celui-ci).

La précision requise est alors inférieure au décimètre. De ce fait, utiliser la technique exposée en référence au premier cas de figure pour déterminer la distance L1 n'est pas envisageable. La technique utilisée est alors la suivante.

En réponse aux requêtes successivement émises par le contrôleur 12 vers le terminal mobile 20, ce dernier émet une pluralité de signaux émis S1.

Comme cela a été exposé supra, à chacun de ces instants, deux signaux reçus S2$_A$, S2$_B$, présentant respectivement des niveaux de puissance RSSI$_A$, RSSI$_B$, sont alors acquis par le calculateur 12.

Alors, le contrôleur 12 exploite ces signaux reçus S2$_A$, S2$_B$ pour déterminer si le terminal mobile 20 est situé à l'intérieur ou à l'extérieur de l'habitacle du véhicule automobile 10.

Il applique pour cela une fonction mathématique f aux premier et second niveaux de puissance RSSI$_A$, RSSI$_B$.

Cette fonction mathématique *f* consiste ici en une moyenne géométrique, ce que l'on peut écrire :

$$f(RSSI_A, RSSI_B) = (RSSI_A{}^2 . RSSI_B{}^2)^{1/2}$$

Le contrôleur 12 estimera alors que le terminal mobile 20 est situé à l'intérieur de l'habitacle du véhicule automobile 10 si le résultat de cette fonction mathématique f est supérieur à une valeur donnée (ici -68 mW en échelle logarithmique). A contrario, on estimera que le terminal mobile 20 est situé à l'extérieur de l'habitacle du véhicule automobile 10 si le résultat de cette fonction mathématique *f* est inférieur à cette valeur donnée.

Cette valeur donnée sera issue de mesures réalisées sur banc de tests.

Pour comprendre la raison pour laquelle ce résultat permet de déterminer la position exacte du terminal mobile 20, on peut se référer à la figure 4.

Cette figure 4 représente, en partie supérieure gauche, un histogramme H$_A$ illustrant la répartition des niveaux de puissance RSSI$_A$ des signaux S2$_A$ reçus via la première antenne 16$_A$ pour plusieurs positions du terminal mobile 20 à l'intérieur de l'habitacle du véhicule automobile 10.

La figure 4 représente, en partie supérieure droite, un histogramme H$_B$ illustrant la répartition des niveaux de puissance RSSI$_B$ des signaux S2$_B$ correspondant reçus via la seconde antenne 16$_B$.

On observe sur ces deux histogrammes H$_A$, H$_B$ que la répartition des niveaux de puissance est assez aléatoire.

La figure 4 représente, en partie inférieure, un histogramme H$_{AB}$ illustrant la répartition des moyennes géométriques f des niveaux de puissance RSSI$_A$, RSSI$_B$ observés pour chaque couple de signaux S2$_A$, S2$_B$.

On observe sur cet histogramme H$_{AB}$ que la répartition des niveaux de puissance varie selon une courbe gaussienne centrée sur la valeur -68.

C'est la raison pour laquelle il apparaît assez fiable de considérer que lorsque la moyenne géométrique f des niveaux de puissance RSSI$_A$, RSSI$_B$ est supérieure ou égale à -68, cela signifie que le terminal mobile 20 est à l'intérieur du véhicule automobile.

On comprend toutefois de cette courbe gaussienne que si le procédé donne des résultats plus fiables lorsqu'on considère les deux antennes en combinaison plutôt qu'une seule antenne, cette fiabilité n'est pas absolue.

Pour optimiser la fiabilité de ce procédé, il sera alors avantageux d'exploiter non pas les niveaux de puissance RSSI$_A$, RSSI$_B$ d'une seule paire de signaux reçus S2$_A$, S2$_B$, mais plutôt les niveaux de puissance RSSI$_A$(k), RSSI$_B$(k) de plusieurs paires de signaux reçus S2$_A$(k), S2$_B$(k), reçus à des instants k successifs.

En d'autres termes, il sera avantageux de considérer non plus uniquement une seule paire de signaux reçus à un instant donné, mais plusieurs paires de signaux reçus au cours d'un intervalle temporel constitué d'un nombre fini d'instants k. Il sera ainsi possible de considérer les M derniers instants k.

Pour cela, le contrôleur 12 pourra émettre des requêtes successives vers le terminal mobile 20, de manière que celui-ci renvoie une pluralité de signaux émis S1 à des instants k successifs. Alors, le contrôleur 12 acquerra plusieurs paires de signaux reçus S2$_A$(k), S2$_B$(k), présentant respectivement des niveaux de puissance RSSI$_A$(k), RSSI$_B$(k). Il pourra alors, pour déterminer la position du terminal mobile 20 à l'intérieur ou à l'extérieur de l'habitacle du véhicule automobile 10, considérer la moyenne géométrique des fonctions mathématiques f$_k$, où :

$$f_k = (RSSI_A(k)^2 \cdot RSSI_B(k)^2)^{1/2}$$

On estimera alors que le terminal mobile 20 est situé à l'intérieur de l'habitacle du véhicule automobile 10 si le résultat de cette fonction mathématique f est supérieur à -68.

Une fois que le terminal mobile 20 aura été détecté comme étant situé à l'intérieur de l'habitacle du véhicule automobile, le contrôleur 12 vérifiera si le terminal mobile 20 est effectivement autorisé à démarrer le moteur du véhicule automobile.

Cette opération pourra par exemple consiste à vérifier qu'une seconde clé virtuelle valable est stockée dans la mémoire 24 du terminal mobile 20.

La présente invention n'est nullement limitée au mode de réalisation décrit et représenté, mais l'homme du métier saura y apporter toute autre variante.

Ainsi, à titre d'exemple, il serait possible de considérer qu'à l'étape a), le signal émis S1 est émis par le contrôleur 12, et que l'étape b) (voir également l'étape c) soient mises en oeuvre par le processeur du terminal mobile 20. En effet, le processeur du terminal mobile 20 pourrait être utilisé pour mesurer les niveaux de puissance des signaux qu'il reçoit, l'un de ces signaux ayant transité par la première antenne 16$_A$ tandis que l'autre de ces signaux aura transité par la seconde antenne 16$_B$.

Selon une autre variante de l'invention, l'unité électronique de commande 11 pourrait comporter 3 antennes, ou plus généralement P antennes (avec P supérieur ou égal à 2). On rappellera à ce sujet que la moyenne géométrique de P niveaux de puissances RSSI$_i$ est égale à :

$$\sqrt[P]{\prod_{i=1}^{P} RSSI_i}$$

Selon une autre variante, on pourrait prévoir de faire varier la puissance des signaux émis en fonction de la situation et de l'état du système.

Plus précisément, on pourra obtenir une précision accrue dans la détermination de la distance séparant le véhicule du terminal mobile en faisant varier la puissance du signal émis (ce qui revient à ajouter un autre paramètre dans les équations mathématiques de détermination de la distance précitée).

A titre d'exemple illustratif, si l'une des antennes possède un gain global sensiblement plus faible que l'autre, il sera possible de compenser ce gain en émettant un signal de puissance plus grande lorsque cette antenne est utilisée. Le but sera ainsi d'harmoniser les couvertures des deux antennes.

Encore en variante, grâce aux deux antennes 16$_A$, 16$_B$ on pourra augmenter la portée d'émission et de réception de l'unité électronique de commande 11 au-delà de l'enveloppe circonscrite aux deux diagrammes de rayonnement D$_A$, D$_B$ (voir figure 3), de manière à couvrir l'ensemble de la zone D$_{AB}$ représenté sur la figure 3.

Pour cela, il sera nécessaire d'appliquer aux signaux reçus S2$_A$, S2$_B$ une fonction mathématique prédéfinie.

A titre d'exemple, une opération combinatoire sur les zones couvertes par les deux antennes 16$_A$, 16$_B$, avec un traitement glissant des données des antennes et une pondération temporelle pour définir si l'utilisateur est en approche ou en éloignement du véhicule, permettra d'obtenir de bons résultats. Autrement formulé, on pourra chercher à déterminer le sens de variation de la distance séparant le véhicule du terminal mobile, afin d'en déduire si le terminal mobile s'éloigne ou se rapproche du véhicule.

Encore en variante, on pourrait prévoir d'utiliser une première antenne ayant une portée confinée à l'intérieur de l'habitacle du véhicule, et une seconde antenne ayant une plus grande portée (d'au moins plusieurs mètres). Dans cette variante, il sera aisé de vérifier de manière fiable si le terminal mobile 20 est à l'intérieur de l'habitacle. Il suffira pour cela de contrôler que la première antenne est en mesure de recevoir les signaux émis par le terminal mobile 20.

Encore en variante, on pourrait prévoir d'utiliser une première antenne très directive, ayant une portée très élevée dans une direction donnée (par exemple en direction de la portière du conducteur) et ayant une portée beaucoup plus réduite dans les autres directions. La seconde antenne pourra quant à elle être choisie de manière à avoir une portée sensiblement constante dans toutes les directions.

Encore en variante, on pourrait prévoir d'utiliser les signaux reçus sur au moins deux antennes pour déterminer, en fonction des ratios des mesures RSSI reçues sur deux antennes, un angle d'arrivée du signal. Cet angle d'arrivée permettant de localiser avec une meilleure précision le terminal mobile. Pour cela, une calibration ou un apprentissage des diagrammes de rayonnement devra être réalisé afin d'avoir une relation entre les antennes et l'angle d'arrivée. D'une manière avantageuse, cette calibration pourra être réalisée directement avec les antennes positionnées sur le véhicule.

**Revendications**

1. Unité électronique de commande (11) destinée à équiper un véhicule automobile (10), comprenant :

    - une première antenne (16$_A$), et

- un contrôleur (12) qui est connecté à ladite première antenne ($16_A$) et qui est adapté à commander une fonctionnalité du véhicule (10) en traitant les niveaux de puissance reçus via ladite première antenne ($16_A$) dans le cadre des signaux échangés avec un terminal mobile (20),

et au moins une seconde antenne ($16_B$) qui présente des propriétés électromagnétiques différentes et/ou une position différente de celles de ladite première antenne ($16_A$) et à laquelle est connecté le contrôleur (12) de telle manière que le contrôleur (12) est adapté à commander la fonctionnalité du véhicule (10) en traitant les niveaux de puissance reçus via ladite seconde antenne ($16_B$) dans le cadre des signaux avec le terminal mobile (20) via ladite seconde antenne ($16_B$), **caractérisée en ce que** la première antenne ($16_A$) présente un diagramme de rayonnement ($D_A$) dont les lobes principaux ($D_A1$, $D_A2$) sont orientés dans des directions différentes de celles des lobes principaux ($D_B1$, $D_B2$, $D_B3$) du diagramme de rayonnement ($D_B$) de la seconde antenne ($16_B$).

2. Unité électronique de commande (11) selon la revendication précédente, dans laquelle les première et seconde antennes ($16_A$, $16_B$) présentent des positions différentes en ce qu'elles sont situées à une distance l'une de l'autre supérieure au quart de la longueur d'onde minimum utilisée pour communiquer avec le terminal mobile (20).

3. Unité électronique de commande (11) selon l'une des revendications précédentes, dans laquelle les première et seconde antennes ($16_A$, $16_B$) présentent des positions différentes en ce qu'elles sont orientées dans des directions inclinées l'une par rapport à l'autre d'un angle supérieur à 10 degrés.

4. Unité électronique de commande (11) selon l'une des revendications précédentes, dans laquelle les première et seconde antennes ($16_A$, $16_B$) présentent des propriétés électromagnétiques différentes en ce qu'elles présentent des diagrammes de rayonnement ($D_A$, $D_B$) de formes différentes.

5. Procédé de contrôle de l'accès à au moins une fonctionnalité d'un véhicule automobile (10) par un utilisateur équipé d'un terminal mobile (20), ledit véhicule automobile (10) étant équipé d'une unité électronique de commande (11) conforme à l'une au moins de revendications précédentes, comportant :

a) une étape d'émission par le terminal mobile (20), ou respectivement par le contrôleur (12), d'un signal émis (S1),
b) une étape de réception par le contrôleur (12), ou respectivement par le terminal mobile (20), d'un premier signal reçu ($S2_A$) ayant transité par la première antenne ($16_A$) et présentant un premier niveau de puissance ($RSSI_A$) et d'un second signal reçu ($S2_B$) ayant transité par la seconde antenne ($16_B$) et présentant un second niveau de puissance ($RSSI_B$),
c) une étape de mesure des premier et second niveaux de puissance ($RSSI_A$, $RSSI_B$),
d) une étape de vérification, opérée en fonction des premier et second niveaux de puissance ($RSSI_A$, $RSSI_B$), au cours de laquelle le contrôleur (12) vérifie que le terminal mobile (20) est autorisé à accéder à ladite fonctionnalité, et,
e) si le terminal mobile (20) est autorisé à accéder à ladite fonctionnalité, une étape d'autorisation au cours de laquelle l'unité électronique de commande (11) autorise l'accès à ladite fonctionnalité.

6. Procédé de contrôle selon la revendication 5, dans lequel, à l'étape d), le contrôleur exploite uniquement le signal reçu ($S2_A$, $S2_B$) dont le niveau de puissance ($RSSI_A$, $RSSI_B$) est le plus élevé.

7. Procédé de contrôle selon l'une des revendications 5 et 6, dans lequel :

- à l'étape c), il est prévu d'évaluer la distance (L1) séparant l'unité électronique de commande (11) du terminal mobile (20), en fonction des premier et second niveaux de puissance ($RSSI_A$, $RSSI_B$), et,
- à l'étape d), le terminal mobile (20) est autorisé à accéder à ladite fonctionnalité uniquement si ladite distance (L1) est inférieure à un seuil prédéterminé ($L_{seuil1}$).

8. Procédé de contrôle selon la revendication 7, dans lequel, à l'étape c), ladite distance (L1) est évaluée au moyen d'une fonction mathématique qui est appliquée auxdits premier et second niveaux de puissance ($RSSI_A$, $RSSI_B$) et qui permet de distinguer le cas où ledit terminal mobile (20) est situé à l'intérieur de l'habitacle du véhicule automobile du cas où ledit terminal mobile (20) est situé à l'extérieur de l'habitacle du véhicule automobile.

9. Procédé de contrôle selon la revendication 8, dans lequel ledit calcul mathématique consiste en une combinaison mathématique desdits premier et second niveaux de puissance ($RSSI_A$, $RSSI_B$), préférentiellement en une moyenne géométrique desdits premier et second niveaux de puissance ($RSSI_A$, $RSSI_B$).

10. Procédé de contrôle selon l'une des revendications 6 à 10, dans lequel, à l'étape a), le signal émis (S1) est émis par le terminal mobile (20), et les étapes b) à e) sont opérées par le contrôleur (12).

**11.** Procédé de contrôle selon l'une des revendications 6 à 10, dans lequel, à l'étape a), le signal émis (S1) est émis par le contrôleur (12), et les étapes b) et c) sont opérées par le terminal mobile (20).

**Patentansprüche**

**1.** Elektronische Steuereinheit (11), die dazu bestimmt ist, in einem Kraftfahrzeug (10) eingesetzt zu sein, beinhaltend:

- eine erste Antenne ($16_A$) und
- eine Überwachungseinheit (12), die mit der ersten Antenne ($16_A$) verbunden ist und dazu angepasst ist, eine Funktion des Fahrzeugs (10) zu steuern, indem sie die Leistungspegel verarbeitet, die sie im Rahmen der mit einem mobilen Endgerät (20) ausgetauschten Signale über die erste Antenne ($16_A$) empfängt, und mindestens eine zweite Antenne ($16_B$), die elektromagnetische Eigenschaften und/oder eine Position, die sich von denjenigen der ersten Antenne ($16_A$) unterscheiden, aufweist und mit der die Überwachungseinheit (12) auf eine solche Weise verbunden ist, dass die Überwachungseinheit (12) dazu angepasst ist, die Funktion des Fahrzeugs (10) zu steuern, indem sie die Leistungspegel verarbeitet, die sie im Rahmen der Signale mit dem mobilen Endgerät (20) über die zweite Antenne ($16_B$) über die zweite Antenne ($16_B$) empfängt, **dadurch gekennzeichnet, dass** die erste Antenne ($16_A$) ein Strahlungsdiagramm ($D_A$) aufweist, dessen Hauptkeulen ($D_A1$, $D_A2$) in Richtungen ausgerichtet sind, die sich von denjenigen der Hauptkeulen ($D_B1$, $D_B2$, $D_B3$) des Strahlungsdiagramms ($D_B$) der zweiten Antenne ($16_B$) unterscheiden.

**2.** Elektronische Steuereinheit (11) nach dem vorhergehenden Anspruch, wobei die erste und die zweite Antenne ($16_A$, $16_B$) unterschiedliche Positionen aufweisen, da sie sich in einem Abstand zueinander befinden, der größer als ein Viertel der minimalen Wellenlänge ist, die für die Kommunikation mit dem mobilen Endgerät (20) benutzt wird.

**3.** Elektronische Steuereinheit (11) nach einem der vorhergehenden Ansprüche, wobei die erste und die zweite Antenne ($16_A$, $16_B$) unterschiedliche Positionen aufweisen, da sie in Richtungen ausgerichtet sind, die um einen Winkel von mehr als 10 Grad relativ zueinander geneigt sind.

**4.** Elektronische Steuereinheit (11) nach einem der vorhergehenden Ansprüche, wobei die erste und die zweite Antenne ($16_A$, $16_B$) unterschiedliche elektromagnetische Eigenschaften aufweisen, da sie Strahlungsdiagramme ($D_A$, $D_B$) mit unterschiedlichen Formen aufweisen.

**5.** Verfahren zur Überwachung des Zugriffs auf mindestens eine Funktion eines Kraftfahrzeugs (10) durch einen Benutzer, der über ein mobiles Endgerät (20) verfügt, wobei das Kraftfahrzeug (10) über eine elektronische Steuereinheit (11) nach mindestens einem der vorhergehenden Ansprüche verfügt, umfassend:

a) einen Schritt des Sendens, durch das mobile Endgerät (20) bzw. durch die Überwachungseinheit (12), eines Sendesignals (S1),
b) einen Schritt des Empfangens, durch die Überwachungseinheit (12) bzw. durch das mobile Endgerät (20), eines ersten Empfangssignals ($S2_A$), das über die erste Antenne (16A) weitergeleitet wurde und einen ersten Leistungspegel ($RSSI_A$) aufweist, und eines zweiten Empfangssignals ($S2_B$), das über die zweite Antenne ($16_B$) weitergeleitet wurde und einen zweiten Leistungspegel ($RSSI_B$) aufweist,
c) einen Schritt des Messens des ersten und des zweiten Leistungspegels ($RSSI_A$, $RSSI_B$),
d) einen Schritt des Überprüfens, der in Abhängigkeit von dem ersten und dem zweiten Leistungspegel ($RSSI_A$, $RSSI_B$) durchgeführt wird, während dessen die Überwachungseinheit (12) überprüft, ob das mobile Endgerät (20) autorisiert ist, auf die Funktion zuzugreifen, und
e) wenn das mobile Endgerät (20) autorisiert ist, auf die Funktion zuzugreifen, einen Schritt des Autorisierens, während dessen die elektronische Steuereinheit (11) den Zugriff auf die Funktion autorisiert.

**6.** Überwachungsverfahren nach Anspruch 5, wobei die Überwachungseinheit in Schritt d) nur dasjenige Empfangssignal ($S2_A$, $S2_B$) nutzt, dessen Leistungspegel ($RSSI_A$, $RSSI_B$) am höchsten ist.

**7.** Überwachungsverfahren nach einem der Ansprüche 5 und 6, wobei:

- in Schritt c) das Ermitteln des Abstands (L1), der die elektronische Steuereinheit (11) von dem mobilen Endgerät (20) trennt, in Abhängigkeit von dem ersten und dem zweiten Leistungspegel ($RSSI_A$, $RSSI_B$) vorgesehen ist und
- in Schritt d) das mobile Endgerät (20) nur dann autorisiert ist, auf die Funktion zuzugreifen, wenn der Abstand (L1) kleiner als ein vorgegebener Schwellenwert ($L_{schwelle1}$) ist.

**8.** Überwachungsverfahren nach Anspruch 7, wobei in Schritt c) der Abstand (L1) mit Hilfe einer mathematischen Funktion ermittelt wird, die auf den ersten und den zweiten Leistungspegel ($RSSI_A$, $RSSI_B$) angewendet wird und die es ermöglicht, den Fall, in dem sich das mobile Endgerät (20) im Inneren der Fahrgastzelle des Kraftfahrzeugs befindet, von dem Fall, in dem sich das mobile Endgerät (20) außerhalb der Fahrgastzelle des Kraftfahrzeugs befindet, zu unterscheiden.

9. Überwachungsverfahren nach Anspruch 8, wobei die mathematische Berechnung aus einer mathematischen Kombination des ersten und des zweiten Leistungspegels ($RSSI_A$, $RSSI_B$), vorzugsweise aus einem geometrischen Mittel des ersten und des zweiten Leistungspegels ($RSSI_A$, $RSSI_B$), besteht.

10. Überwachungsverfahren nach einem der Ansprüche 6 bis 10, wobei in Schritt a) das Sendesignal (S1) durch das mobile Endgerät (20) gesendet wird und die Schritte b) bis e) durch die Überwachungseinheit (12) durchgeführt werden.

11. Überwachungsverfahren nach einem der Ansprüche 6 bis 10, wobei in Schritt a) das Sendesignal (S1) durch die Überwachungseinheit (12) gesendet wird und die Schritte b) und c) durch das mobile Endgerät (20) durchgeführt werden.

**Claims**

1. Electronic control unit (11) intended to be fitted in a motor vehicle (10), comprising:

   - a first antenna ($16_A$), and
   - a controller (12) that is connected to said first antenna ($16_A$) and that is designed to control a functionality of the vehicle (10) by processing the power levels received via said first antenna ($16_A$) as part of the signals exchanged with a mobile terminal (20),

   and at least one second antenna ($16_B$) that has electromagnetic properties that are different and/or a position that is different from those of said first antenna ($16_A$) and to which the controller (12) is connected such that the controller (12) is able to control the functionality of the vehicle (10) by processing the power levels received via said second antenna ($16_B$) as part of the signals with the mobile terminal (20) via said second antenna ($16_B$), **characterized in that** the first antenna ($16_A$) has a radiation pattern ($D_A$) the main lobes ($D_A1$, $D_A2$) of which are oriented in directions different from those of the main lobes ($D_B1$, $D_B2$, $D_B3$) of the radiation pattern ($D_B$) of the second antenna (16B).

2. Electronic control unit (11) according to the preceding claim, wherein the first and second antennas ($16_A$, $16_B$) have different positions in that they are located at a distance from one another greater than a quarter of the minimum wavelength used to communicate with the mobile terminal (20).

3. Electronic control unit (11) according to either of the preceding claims, wherein the first and second antennas ($16_A$, $16_B$) have different positions in that they are oriented in directions that are inclined with respect to one another by an angle greater than 10 degrees.

4. Electronic control unit (11) according to one of the preceding claims, wherein the first and second antennas ($16_A$, $16_B$) have different electromagnetic properties in that they have radiation patterns ($D_A$, $D_B$) of different shapes.

5. Method for controlling access to at least one functionality of a motor vehicle (10) for a user equipped with a mobile terminal (20), said motor vehicle (10) being equipped with an electronic control unit (11) according to at least one of the preceding claims, comprising:

   a) a step of the mobile terminal (20), or respectively the controller (12), emitting an emitted signal (S1),
   b) a step of the controller (12), or respectively the mobile terminal (20), receiving a first received signal ($S2_A$) that has transited via the first antenna ($16_A$) and that has a first power level ($RSSI_A$) and a second received signal ($S2_B$) that has transited via the second antenna ($16_B$) and that has a second power level ($RSSI_B$),
   c) a step of measuring the first and second power levels ($RSSI_A$, $RSSI_B$),
   d) a checking step, carried out on the basis of the first and second power levels ($RSSI_A$, $RSSI_B$), during which the controller (12) checks that the mobile terminal (20) is authorized to access said functionality, and,
   e) if the mobile terminal (20) is authorized to access said functionality, an authorization step in which the electronic control unit (11) authorizes access to said functionality.

6. Control method according to Claim 5, wherein, in step d), the controller uses only the received signal ($S2_A$, $S2_B$) having the highest power level ($RSSI_A$, $RSSI_B$).

7. Control method according to either of Claims 5 and 6, wherein:

   - in step c), provision is made to evaluate the distance (L1) between the electronic control unit (11) and the mobile terminal (20), on the basis of the first and second power levels ($RSSI_A$, $RSSI_B$), and,

- in step d), the mobile terminal (20) is authorized to access said functionality only if said distance (L1) is below a predetermined threshold ($L_{threshold1}$).

8. Control method according to Claim 7, wherein, in step c), said distance (L1) is evaluated by way of a mathematical function that is applied to said first and second power levels ($RSSI_A$, $RSSI_B$) and that makes it possible to distinguish the case where said mobile terminal (20) is located inside the passenger compartment of the motor vehicle from the case where said mobile terminal (20) is located outside the passenger compartment of the motor vehicle.

9. Control method according to Claim 8, wherein said mathematical calculation consists of a mathematical combination of said first and second power levels ($RSSI_A$, $RSSI_B$), preferably of a geometric average of said first and second power levels ($RSSI_A$, $RSSI_B$).

10. Control method according to one of Claims 6 to 10, wherein, in step a), the emitted signal (S1) is emitted by the mobile terminal (20), and steps b) to e) are carried out by the controller (12).

11. Control method according to one of Claims 6 to 10, wherein, in step a), the emitted signal (S1) is emitted by the controller (12), and steps b) and c) are carried out by the mobile terminal (20).

# Fig.1

# Fig.2

# Fig.3

# Fig.4

**EP 3 347 943 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 2832510 A1
- DE 19845649 A1
- JP 2015113643 A